# EUROPEAN PATENT SPECIFICATION

(11) **EP 3 246 285 B1**
(45) Date of publication and mention of the grant of the patent: **15.11.2023**
(21) Application number: 15877906.6
(22) Date of filing: 28.09.2015
(51) Int. Cl.: B66F 19/00, A61H 3/00, B25J 11/00, B66D 3/18, B25J 9/00

(54) **ASSISTIVE SUIT**
UNTERSTÜTZENDER ANZUG
COMBINAISON D'ASSISTANCE

(30) Priority: 14.01.2015 JP 2015005126; 14.01.2015 JP 2015005125; 14.01.2015 JP 2015005124; 14.01.2015 JP 2015005123; 14.01.2015 JP 2015005122
(43) Date of publication of application: 22.11.2017
(73) Proprietor: Kubota Corporation, Osaka-shi, Osaka 556-8601 (JP)
(72) Inventor: HAYASHI Shigeki, Sakai-shi Osaka 590-0823 (JP); SAKANO Tomoyoshi, Sakai-shi Osaka 590-0823 (JP); NISHIDA Keisuke, Sakai-shi Osaka 590-0823 (JP); HAYASHI Masahiko, Sakai-shi Osaka 590-0823 (JP)
(74) Representative: Cabinet Beau de Loménie
(86) International application number: PCT/JP2015/077369
(87) International publication number: WO 2016/113954

(56) References cited:
- FR-A1- 2 978 690
- JP-A- H11 246 184
- JP-A- 2009 284 919
- JP-A- 2009 533 300
- JP-A- 2013 052 192
- JP-A- 2013 173 190
- JP-A- 2013 531 593
- JP-B2- 4 662 248
- US-A1- 2011 264 014
- US-A1- 2013 303 950

## Description

### TECHNICAL FIELD OF THE INVENTION

The present invention relates to an assistive suit

### BACKGROUND OF THE INVENTION

Conventionally, there is an assistive suit of this type in which: a control device is provided at an upper end side position that is on an imaginary flat surface of a main body portion (an imaginary flat surface that extends along a back of an operator who wears the assistive suit); and a lifting/lowering device is provided at a position that is on an intermediate portion of the main body portion in a vertical direction and is widely apart rearward from the flat surface of the main body portion (see e.g. Patent Literature 1).

Also, conventionally, there are assistive suits of this type in which an attaching portion is constituted by an integrated belt-shaped member that has the shape of "C" in top plan view, and the attaching portion is configured to be attached to the waist of an operator via a gap between the two end portions of the member (see e.g. Patent Literature 1).

Specifically, the belt-shaped member is attached to the operator, surrounding the rear side and both lateral sides of the waist of the operator, and the gap is located in a front portion of the belt-shaped member.

Also, conventionally, there is an assistive suit of this type in which pivot arm portions are directly attached to the main body portion and are configured to swingable only in a front-rear direction about a lateral axis (see e.g. Patent Literature 1).

The pivot arm portions are configured to be located laterally outward of the thighs of the operator, and abutting portions are fixed to the pivot arm portions so as to bulge laterally inward from the swinging tip ends of the pivot arm portions (toward front portions of the thighs of the operator who wears the assistive suit).

Conventionally, when moving a load in a factory or a workplace, or nursing a person who is to be nursed in the scene of nursing, there is an issue concerning a burden on muscles and bones of the person who performs such an operation (hereinafter referred to as "the operator"). Therefore, technology for using motive power to assist the operator to move has been considered in order to reduce a burden on the operator (see e.g. Patent Literatures 1 and 2).

The portable load lifting system disclosed in Patent Literature 1 includes: end effectors that are suspended from a load lifting mechanism using wires; and a motor that reels up the wires upon a load being fixed to the end effectors.

The power assist robotic device disclosed in Patent Literature 2 includes a lifter device that lifts a load, and when the lifter device lifts a load, a pneumatic artificial rubber muscle, which is powered by air pressure, is employed.

Also, the portable load lifting system disclosed in Patent Literature 1 includes thigh links and shank links, which serve as leg supports that are attachable to the lower limbs of a person.

Also, the power assist robotic device disclosed in Patent Literature 2 employs pneumatic cylinders in order to assist the right and left hip joints and knee joints to move. US 2013/303950 A1 discloses an assistive suit according to the preamble of claim 1. US 2011/264014 A1 and FR 2 978 690 A1 also disclose assistive suits.

### PRIOR ART DOCUMENTS

### Patent Literatures

Patent Literature 1: JP 2013-531593A
Patent Literature 2: JP 2013-052192A

### SUMMARY OF THE INVENTION

### Problem(s) to be Solved by the Invention

With any one of the conventional assistive suits above, when the operator wears the assistive suit such that the main body portion extends along the back of the operator, although the control device is unlikely to prevent the operator from moving because the control device is located along the main body portion and the distance from the back of the operator to the control apparatus is short, the lifting/lowering device is located at a position that is widely apart rearward from the flat surface of the main body portion, and therefore the distance from the operator to the lifting/lowering device is long.

Although the operator moves recognizing that he/she is wearing the assistive suit on his/her back, the operator may erroneously recognize the state of the rearward protrusion of the assistive suit because circumstances on the rear side when the operator is not wearing the assistive suit and circumstances on the rear side when the operator is wearing the assistive suit are significantly different.

As a result, for example, when the operator walks or moves wearing the assistive suit, there is a problem in which the operator has difficulty in moving because the operator is likely to hit the rearward protrusion of the assistive suit against another object.

Therefore, the present invention aims to solve the above-described problem, and to provide an assistive suit that allows an operator who wears the assistive suit to move more easily.

With any one of the conventional assistive suits above, in order to stably attach the assistive suit to the waist of the operator, a flexible member is used as the belt-shaped member, and for example, the following procedure is performed when the operator puts on the assistive suit: the belt-shaped member is temporarily deformed in a direction in which the diameter thereof increases, and is placed on the waist, covering the waist, and then, upon the operation to increase the diameter being cancelled, the belt-shaped member is allowed to restore its original shape in a direction in which the diameter thereof decreases by the effect of an elastic restoring force, and thus the belt-shaped member is fastened to the waist.

Since the belt-shaped member is a main coupling member by which the assistive suit is coupled to the operator, a large force is applied to the member. In order to realize a stably attached state, it is necessary that the belt-shaped member is configured to be able to produce a large fastening force. However, if the belt-shaped member is fastened with a too large force, a heavy burden is imposed on the operator, which makes it difficult for the operator to move. Thus, it is very difficult to set the degree of the elasticity of the belt-shaped member.

Even if an appropriate fastening force is set for one model operator, such a fastening force may not be suitable for every one of a plurality of operators because the fastening force is applied in a different manner depending on the shape and size of the waist of the operator.

For example, if a person who has a thick waist wears the assistive suit, the belt-shape member can be fastened with a too large force, which makes it difficult for the person to move. Conversely, if a person who has a thin waist wears the assistive suit, the belt-shape member can be fastened with a too small force, which may cause an unstably attached state.

Furthermore, if the linear contour of the outer circumferential surface of the waist of the operator is significantly different from the linear contour of the belt-shaped member, it is possible that only some portions (e.g. two end portions) of the belt-shaped member are strongly pressed against a local area of the waist, which may cause discomfort.

That is, with any one of the above-described conventional assistive suits, there is a problem in which it is difficult to provide an appropriately attached state for each operator.

Therefore, the present invention aims to solve the above-described problem and to provide an assistive suit that can be appropriately attached to any one of a plurality of operators who are different from each other in the shape and size of their waists.

When an operator puts on an assistive suit of this type, the following procedure is often performed: the main body portion of the assistive suit, which has been positioned rearward of the operator to whom the assistive suit is to be attached, is moved forward so as to abut against the back of the operator, and then the assistive suit is fixed to the body using a waist belt, shoulder belts, or the like. When the assistive suit is to be removed, the procedure is performed in reverse.

With any one of the conventional assistive suits above, when the operator moves the assistive suit forward from the rear side of the operator to wear the assistive suit, abutting portions that protrude laterally inward from tip end portions of the pivot arm portions abut against and interfere with rear portions of the thighs of the operator, and prevent the operator from moving. Also, when operator removes the assistive suit, the abutting portions abut against front portions of the thighs of the operator, and thus similarly prevent the operator from moving.

As a result, when putting on and taking off the assistive suit, it is necessary for the operator to, for example, swing one of the right and left pivot arm portions about the lateral axis such that the right and left abutting portions are separated from each other in the front-rear direction, or to twist his/her body or legs to prevent his/her thighs from coming into contact with the abutting portions. Thus, there is a problem in which it is very troublesome and difficult to put on and take off the assistive suit.

Therefore, the present invention aims to solve the above-described problem, and to provide an assistive suit that allows an operator to easily put it on and take it off without taking a troublesome procedure.

The technologies disclosed in Patent Literatures 1 and 2 are employed to lift a load using motive power, to assist an operator to perform an operation to lift a load. However, these technologies are not intended to adjust the assisting force depending on the situation. Therefore, it is not easy to adjust the assisting force depending on the state of, or the circumstances around, the operator who is lifting a load, for example.

In view of the problem above, the present invention aims to provide an assistive suit that can assist an operator to perform an operation according to the situation.

The technology disclosed in the Patent Literature 1 is not intended to assist joints of the operator to move when the operator extends and bends his/her hip joints and knee joints. Therefore, it is not possible to assist the operator to extend his/her bent knees. Also, although the technology disclosed in Patent Literature 2 assists the hip joints and knee joints of the operator to move when the operator extends or bends the joints, the technology disclosed in the Patent Literature 2 is not intended to adjust the assisting force according to the situation. Therefore, if the assisting force does not match the movement of the operator, the operator may feel discomfort.

In view of the problem above, the present invention aims to provide an assistive suit that can assist an operator to stand up according to the movement of the operator.

### Solution(s) to the Problem(s)

The present invention provides an assistive suit according to claim 1.

According to the present invention, the devices that are installed to the rear surface of the main body portion, such as the lifting/lowering device, the control device and the power supply device, are provided so as to be aligned along the flat surface of the main body portion. Therefore, it is possible to prevent the devices from being piled up on the rear side of the main body portion, and it is possible to limit the length of the protrusion of the devices that protrude from the rear side of the main body portion to the minimum, and realize a thin configuration.

Therefore, even if the operator moves around wearing the assistive suit, it is less likely that the rear surface portion of the assistive suit hits against another object.

As a result, the operator wearing the assistive suit can move more easily.

According to one preferable aspect of the present invention in furtherance thereto, the lifting/lowering device, the control device and the power supply device are provided on the main body portion so as to be aligned in a vertical direction of the main body portion.

With this configuration, the devices such as the lifting/lowering device, the control device and the power supply device are prevented from being piled up on a lateral side of the main body portion, and it is possible to limit the width of the devices to the minimum.

Therefore, even if the operator moves around wearing the assistive suit, it is less likely that the side surface portion of the assistive suit hits against another object.

As a result, the operator wearing the assistive suit can move even more easily.

According to one preferable aspect of the present invention in furtherance thereto, the lifting/lowering device, the control device and the power supply device are arranged in the order of: the lifting/lowering device, the control device and the power supply device, from the top.

With this configuration, the lifting/lowering device is located upward of the control device and the power supply device, and therefore, it is possible to reduce the length of a cord-like member (such as an operation wire) that is reeled out from the lifting/lowering device and is used to lift and lower the load operating portion in the state of being suspended.

Furthermore, the control device, which is the core of the assistive suit, is guarded by the lifting/lowering device from above and by the power supply device from below. Therefore, it is easier to protect the control device from being damaged by hitting against another object, and it is possible to maintain proper device control.

According to another aspect, which is not claimed but is included for illustrative purposes, of the present disclosure, there is provided:
An assistive suit comprising:
a main body portion that is to be attached to a back of an operator;
a load operating portion that extends forward from the main body portion across the operator to hold a load; and
a driving device that is provided in the main body portion and drives the load operating portion,
wherein an attachment belt portion that is to be wound around the waist of the operator to attach the main body portion to the back of the operator is provided on a lower portion of the main body portion,
pads that are configured to abut against the waist of the operator are provided on the attachment belt portion respectively at a plurality of positions in a circumferential direction of the attachment belt portion, and
the assistive suit further comprises a position changing mechanism that is configured to change the positions to which the pads are attached, in the circumferential direction of the attachment belt portion.

According to this aspect of the present disclosure, assistive suit is configured to be attached to the operator using the attachment belt portion. Therefore, the operator can easily put on the assistive suit by winding the attachment belt portion around the waist of the operator. Also, the attachment belt portion can be attached according to the shape and size of the waist of the operator. Therefore, the attachment belt portion can be appropriately attached to any one of a plurality of operators who are different from each other in the shape and size of their waists.

Moreover, the pads are provided on the attachment belt portion respectively at a plurality of positions in the circumferential direction of the attachment belt portion. Therefore, even if the attachment belt portion is wound using a relatively strong force, the pads can reduce a stress that is applied to the waist, and it is possible to prevent a stress from being concentrated to a local area.

Furthermore, due to the position changing mechanism being provided, the positions on the attachment belt portion to which the pads are attached can be freely changed in the circumferential direction, and the pads can be located on the waist at positions that the operator regards as optimal.

Therefore, the aspect of the present disclosure can provide an assistive suit that allows an operator who wears the assistive suit to move easily, and reduces a burden on the operator.

According to one preferable aspect of the present disclosure in furtherance thereto, the position changing mechanism is constituted by a belt length adjustment mechanism that is provided in portions of the attachment belt portion, the portions corresponding to two sides of the abdomen of the operator.

With this configuration, it is possible to change the positions of the pads on the attachment belt portion, using the belt length adjustment mechanism.

To change the positions of the pads, it is also possible to attach the pads to the attachment belt portion via a slidable mechanism. However, in contrast with this configuration, the configuration according to the aspect of the present disclosure using the belt length adjustment mechanism can prevent the pads from unexpectedly moving from the set positions.

Therefore, if the operator moves wearing the assistive suit, the pads will not move from the originally set positions, and thus it is easier to maintain the appropriately attached state of the assistive suit.

According to still another aspect, which is not claimed but is included for illustrative purposes, of the present disclosure, there is provided:
An assistive suit comprising:
a main body portion that is to be attached to a back of an operator; a leg operating portion that extends from the main body portion and is configured to press a leg of the operator downward to assist the operator to stand up; a load operating portion that extends forward from the main body portion across the operator to hold a load; and a driving device that is provided in the main body portion and drives the leg operating portion,
wherein the leg operating portion includes:
   a pivot arm portion that is supported so as to be swingable in a front-rear direction about a lateral axis relative to the main body portion;
   an abutting portion that is provided at a tip end portion of the pivot arm portion and is configured to abut against a front portion of a thigh of the operator; and
   a leg operating portion switching mechanism that is configured to switch between an operative state in which the abutting portion abuts against the thigh of the operator and an inoperative state in which the abutting portion is retracted to a position that is laterally outward of the thigh of the operator.

According to this aspect of the present disclosure, due to the leg operating portion switching mechanism being provided, it is possible to temporarily switch the abutting portion to the inoperative state when putting on and taking off the assistive suit.

As a result, it is possible to put on and take off the assistive suit by moving the assistive suit in the front-rear direction with the abutting portion being retracted laterally outward of the thigh. Therefore, the abutting portion does not prevent the operator from moving the assistive suit, and the operator can easily and quickly put on and take off the assistive suit.

Upon the operator putting on the assistive suit, the operator can set the abutting portion to be located on the front portion of the thigh and achieve its original function by returning the abutting portion to the operative state.

According to one preferable aspect of the present disclosure in furtherance thereto, a position changing mechanism that is configured to change a separation distance to the abutting portion from the lateral axis.

With this configuration, due to the position changing mechanism being provided, it is possible to change and adjust the separation distance to the abutting portion from the lateral axis, which is the rotational axis of the pivot arm portion.

As a result, it is possible to change and adjust the position against which the abutting portion abuts on the front portion of the thigh, in the longitudinal direction.

The position of the abutting portion is changed according to factors such as the body shape of the operator, the length of the thigh, and the operator's preference.

For example, if the operator is small and his/her thighs are short, it is possible to reduce the rotational radius matching with the length of the thighs by reducing the separation distance to the abutting portion from the lateral axis, using the position changing mechanism, and bringing the abutting portion closer to the lateral axis.

Also, if the operator is large and his/her thighs are long, it is possible to similarly set the abutting portion at the optimum position.

As described above, with this configuration, it is possible to adjust the position of the abutting portion depending on the body shape and the preference of the operator to whom the assistive suit is to be attached, and it is possible to attach the assistive suit to various operators.

According to one preferable aspect of the present disclosure in furtherance thereto, the abutting portion includes an abutting surface portion that is configured to abut against a front surface of the thigh of the operator, and the assistive suit further comprises an orientation changing mechanism that is configured to change and adjust an orientation of the abutting portion such that a surface of the thigh of the operator and the abutting surface portion abut against each other.

With this configuration, since the abutting portion is provided with the abutting surface portion, the abutting portion abut against a large area of the front surface of the thigh compared to when the abutting portion has a point-like or linear shape. Therefore, it is possible to disperse a stress that is applied to the thigh over a wide area, and reduce the stress per unit area. Therefore, even if the assistive suit is used for a long period, the stress from the abutting portion is less likely to be concentrated to a local area of the thigh, and thus it is possible to improve the usability.

Also, since the orientation changing mechanism is provided, it is possible to change the orientation of the abutting portion such that the abutting portion is likely to fit to the surface of the thigh. Thus, it becomes easier to achieve the above-described effects.

According to still another aspect, which is not claimed but is included for illustrative purposes, of the present disclosure, there is provided:
An assistive suit comprising:
a main body portion that is located at a position on a back of an operator;
an arm portion that extends from the main body portion to a position that is forward of the operator, passing over the head of the operator;
a load operating portion that is suspended from a tip end portion of the arm portion using a wire, and supports the load when the operator holds the load with his/her hand;
a reel motor that is provided in the main body portion and reels the wire according to an instruction from the operator;
a reeling amount detecting portion that detects a reeling amount of the wire that is reeled up by the reel motor; and
a motor control portion that is provided in the main body portion and controls a reeling speed of the reel motor based on the reeling amount.

With such a characteristic configuration, when lifting a load using the assistive suit, it is possible to change the speed of lifting the load according to the height at which the load is located. Therefore, for example, if the operator can fully monitor the load, it is possible to increase the reeling speed to efficiently perform an operation. As described above, with this assistive suit, it is possible to adjust its assistive force depending on the situation to assist the operator to perform an operation.

According to one preferable aspect of the present disclosure in furtherance thereto, the assistive suit further comprises: a rotation number detecting portion that detects the number of rotations of the reel motor,
wherein the reeling amount detecting portion detects the reeling amount based on the number of rotations of the reel motor.

With such a configuration, it is possible to use the rotation number detecting portion that detects the reeling amount, as well as the rotation number detecting portion that is used to perform rotation control on the reel motor. Therefore, it is possible to achieve a compact configuration of the assistive suit at a low cost.

According to one preferable aspect of the present disclosure in furtherance thereto, when starting reeling up of the wire, the motor control portion performs control so that the reeling speed gradually increases and reaches a predetermined reeling speed, and when stopping the reeling up of the wire, the motor control portion performs control so that the reeling speed gradually decreases from the predetermined reeling speed to stop the reeling up.

With such a configuration, it is possible to reduce the reaction force from the load, which acts on the operator when the reeling up of the wire is started or stopped. Therefore, it is possible to reduce a burden on the operator.

According to one preferable aspect of the present disclosure in furtherance thereto, at least when the load operating portion passes in front of the face of the operator, the motor control portion reduces the reeling speed so as to be smaller than the reeling speed during a period until the load operating portion reaches the face.

With such a configuration, it is possible to reduce the moving speed of the load when the load passes in front of the operator. Therefore, it is possible to reduce the operator's fear.

According to one preferable aspect of the present disclosure in furtherance thereto, the motor control portion stops the reel motor if a distance between the load operating portion and a tip end portion of the arm portion becomes equal to or smaller than a predetermined distance.

With such a configuration, it is possible to prevent the wire from being excessively reeled up by the reel motor. Therefore, it is possible to prevent the assistive suit from breaking down, in advance.

According to one preferable aspect of the present disclosure in furtherance thereto, the reeling amount detecting portion calibrates a detected value of the reeling amount of the wire if the distance between the load operating portion and the tip end portion of the arm portion becomes equal to or smaller than the predetermined distance and the reel motor is stopped.

With such a configuration, it is possible to calibrate the reeling amount detecting portion with reference to the reeling amount at the time the distance between the load operating portion and the tip end portion of the arm portion becomes equal to or smaller than the predetermined distance. Therefore, the reeling amount detecting portion can accurately detect the reeling amount of the wire.

According to one preferable aspect of the present disclosure in furtherance thereto, the motor control portion maintains the reeling speed that is based on the reeling amount, regardless of the weight of the load.

With such a configuration, it is possible to set the speed of lifting the load to a predetermined speed, regardless of the weight of the load, and to prevent the operator from feeling discomfort. Also, it is possible to enable the operator to efficiently perform an operation, regardless of the weight of the load.

According to one preferable aspect of the present disclosure in furtherance thereto, the motor control portion stops the reel motor if the reeling speed is deviated from a predetermined acceptable speed and an output torque of the reel motor is deviated from a predetermined acceptable torque.

With such a configuration, when reeling up the wire, the motor control portion can stop the reel motor if the reeling speed suddenly decreases and the output torque of the reel motor suddenly increases due to a foreign object being caught by or becoming entangled with a movable portion of the assistive suit, for example. Therefore, it is possible to remove the foreign object in that state or remove the foreign object by reversing the reel motor.

According to one preferable aspect of the present disclosure in furtherance thereto, the assistive suit further comprises:
a leg operating portion that extends from the main body portion to a thigh of the operator across lateral sides of the operator, and is configured to abut against a front portion of the thigh from a position to which the leg operating portion extends; and
a leg motor that adjusts a load that is applied to the front portion by the leg operating portion according to an instruction from the operator,
wherein the leg operating portion presses the front portion when the operator extends his/her bent knee.

With such a configuration, when the operator lifts a load, the leg operating portion can press the front portion of the thigh so that the operator can easily extend his/her bent knee. Therefore, it is possible to reduce a burden on the knee of the operator.

According to still another aspect, which is not claimed but is included for illustrative purposes, of the present disclosure, there is provided:
An assistive suit comprising:
a main body portion that is located at a position on a back of an operator;
a leg operating portion that extends from the main body portion to a thigh of the operator across lateral sides of the operator, and is configured to abut against a front portion of the thigh from a position to which the leg operating portion extends;
a leg motor that adjusts a load that is applied to the front portion by the leg operating portion according to an instruction from the operator,
a detecting portion that detects an angle that is formed by the trunk and the thigh of the operator; and
a motor control portion that is provided in the main body portion and controls an output torque of the leg motor based on the angle thus detected.

With such a characteristic configuration, it is possible to change the load that is applied to press the front portion of the knee based on the angle that is formed by the trunk of and the thigh of the operator, and it is possible to press the front portion of the knee without making the operator feel discomfort. Therefore, it is possible to assist the operator to stand up according to the movement of the operator.

According to one preferable aspect of the present disclosure in furtherance thereto, the leg operating portion presses the front portion when the operator extends his/her bent knee.

With such a configuration, when the operator lifts a load, the leg operating portion can press the front portion of the thigh so that the operator can easily extend his/her bent knee. Therefore, it is possible to reduce a burden on the knee of the operator.

According to one preferable aspect of the present disclosure in furtherance thereto, the motor control portion maintains the output torque that is based on the angle, regardless of the weight of the load that is held by the operator.

With such a configuration, it is possible to press the front portion of the knee of the operator, regardless of the weight of the load, and to prevent the operator from feeling discomfort. Also, it is possible to enable the operator to efficiently perform an operation, regardless of the weight of the load.

According to one preferable aspect of the present disclosure in furtherance thereto, the motor control portion stops the leg motor if an output torque of the leg motor is deviated from a predetermined acceptable torque.

With such a configuration, when pressing the front portion of the knee of the operator, the motor control portion can stop the leg motor if the output torque of the leg motor suddenly increases due to a foreign object being caught by or becoming entangled with a movable portion of the assistive suit, for example. Therefore, it is possible to remove the foreign object in that state or remove the foreign object by reversing leg motor.

According to one preferable aspect of the present disclosure in furtherance thereto, the detecting portion is a potentiometer that is provided on a rotational axis about which the leg operating portion rotates relative to the main body portion.

With such a configuration, it is possible to accurately detect the bending state of the knee of the operator using a simple configuration. By controlling the output torque of the leg motor based on the result of detection by the potentiometer, it is possible to press the front portion of the knee according to the movement of the operator, without making the operator feel discomfort.

According to one preferable aspect of the present disclosure in furtherance thereto, the assistive suit further comprises:
an arm portion that extends from the main body portion to a position that is forward of the operator, passing over the head of the operator;
a load operating portion that is suspended from a tip end portion of the arm portion using a wire, and supports the load when the operator holds the load with his/her hand; and
a reel motor that is provided in the main body portion and reels the wire according to an instruction from the operator.

With such a configuration, it is possible to enable the operator to easily lift a load using the assistive suit.

### BRIEF DESCRIPTION OF THE DRAWINGS

Fig. 1 is a side view of an assistive suit.
Fig. 2 is a rear view of the assistive suit.
Fig. 3 is a front view of the assistive suit.
Fig. 4 is a top plan view of the assistive suit.
Fig. 5 is an exploded perspective view of leg operating portions.
Fig. 6 explains how an operator lifts a load.
Fig. 7 is a top plan view showing a pulley according to another embodiment.
Fig. 8 is a top plan view showing a pulley according to a still another embodiment.
Fig. 9 is a side view of the assistive suit showing it attached to an operator.
Fig. 10 is a rear view of the assistive suit showing it attached to an operator.
Fig. 11 explains how an operator lifts a load using the assistive suit.
Fig. 12 further explains how the operator lifts a load using the assistive suit.
Fig. 13 shows a relationship between an angle that is formed by a trunk and thighs, and a pressing force of the leg operating portions.
Fig. 14 shows a relationship between the position of a load and a reeling speed.

### DESCRIPTION OF THE EMBODIMENTS

### First Embodiment

The following describes embodiments of the present invention with reference to the drawings.

Unless explicated otherwise, adjective nominations "top", "bottom", "front", "rear", "left" and "right" in the Description refer to "directions of an assistive suit S" based on directions relative to an operator who wears the assistive suit S on his/her back.

Although not shown in the drawings, covering members made of synthetic resin or a metal are provided on appropriate portions of the assistive suit S, and the covering members are configured to cover movable portions and portions that need to be protected.

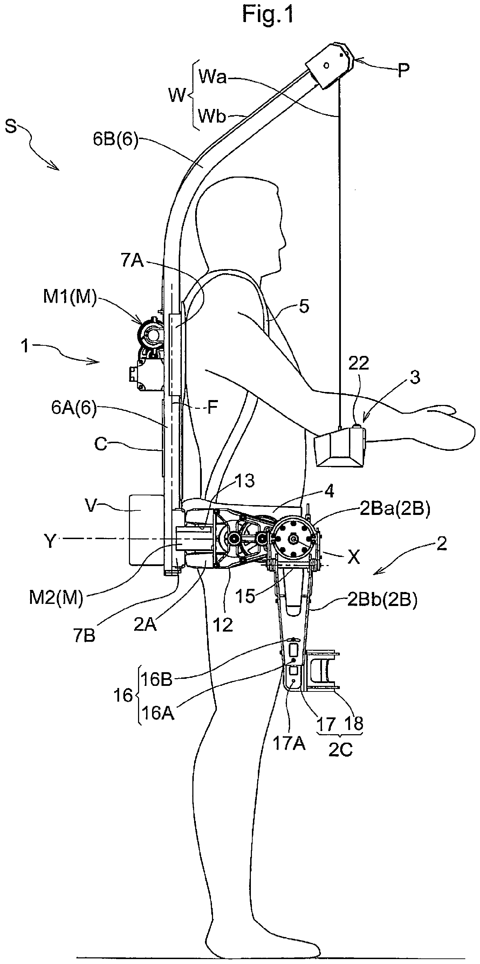

Figs. 1 to 4 show one embodiment of an assistive suit according to the present invention. The assistive suit S includes: a main body portion 1 that is flat and is configured to be attached to a back of an operator so as to extend along the back; right and left leg operating portions 2 that extend from the main body portion 1, and are configured to press leg portions of the operator downward, thereby assisting the operator to stand up; right and left load operating portions 3 that extend forward from the main body portion 1 across the operator to hold a load, and are to be operated by the operator holding the right and left load operating portions 3 with his/her hands; driving means M that drives the leg operating portions 2 and the load operating portions 3; a battery (corresponding to "power supply device") V that can supply power to the driving means M and so on; and a control unit (corresponding to "control device") C that controls the driving of the driving means M.

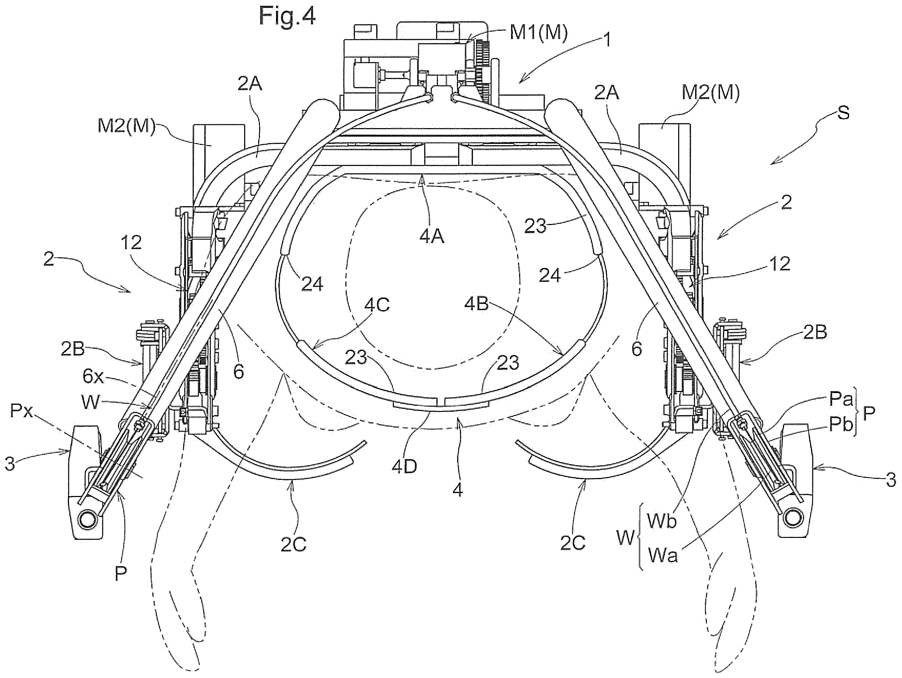

As will be described later, the assistive suit S can be attached to the operator using a waist belt (corresponding to "attachment belt portion") 4 and shoulder belts 5 that are included in the main body portion 1 (see Figs. 1 and 4).

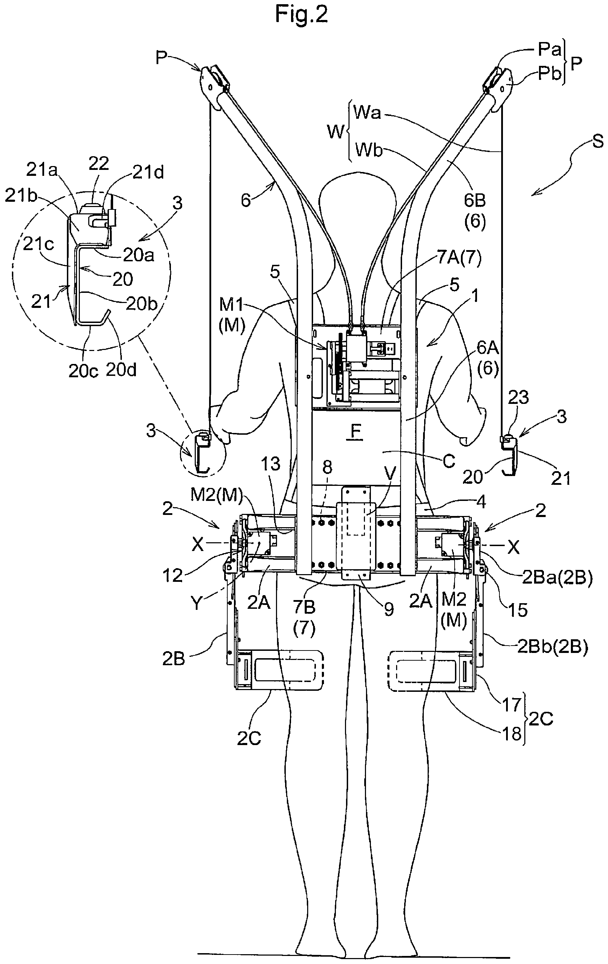

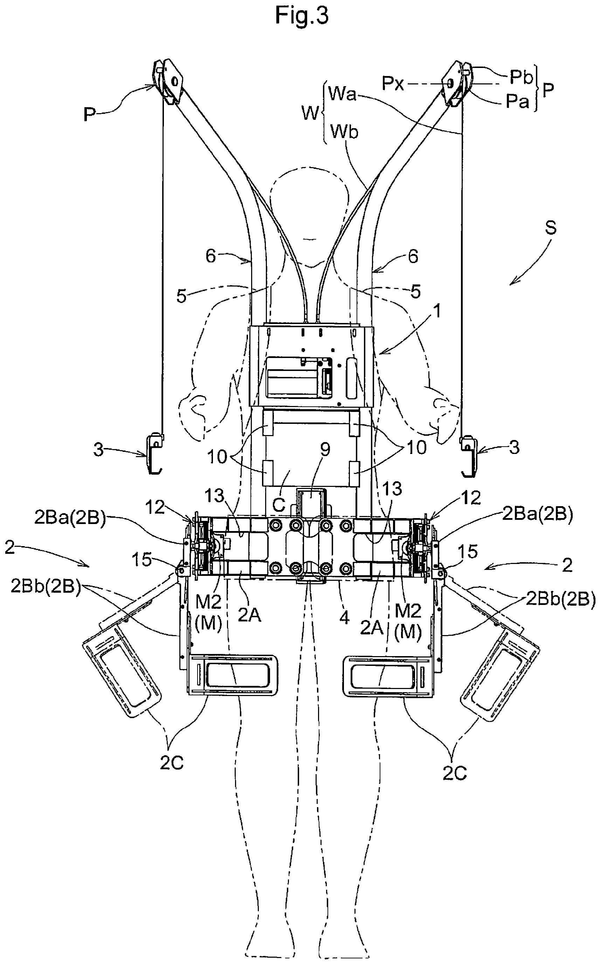

As shown in Figs. 2 and 3, the main body portion 1 is configured as a flat frame-shaped integrated portion that includes: vertical frames 6 that are made of a pair of right and left metal pipes that are provided in parallel with each other with a gap therebetween in a right-left direction; and horizontal frames 7 that are made of metal plates and are respectively coupled to vertically intermediate portions and lower portions of the pair of vertical frames 6. The vertical frames 6 and the horizontal frames 7 may be integrated with each other through welding or bolt coupling, for example.

When the assistive suit S is attached to the operator, an imaginary flat surface F, which includes a rectangle formed by the pair of vertical frames 6 and the pair of horizontal frames 7, extends along the back of the operator (see Fig. 1).

Each vertical frame 6 includes: a vertical frame main body 6A that extends from the vertically intermediate portion to the lower end; and an arm portion 6B that extends from the vertical frame main body 6A to the upper end.

The vertical frame main bodies 6A are formed such that the right and left pipes are substantially parallel with each other, whereas the arm portions 6B are formed in an inclined state such that their respective upper ends spread forward and upward to the right and the left. In other words, each vertical frame 6 is formed so as to have a doglegged linear shape as a whole (see Figs. 1 to 3).

The horizontal distance between the vertical frame main bodies 6A is shorter than the distance between the shoulders of the operator (e.g. half the distance between the shoulders). The horizontal distance between the upper ends of the arm portions 6B is longer than the distance between the shoulders of the operator (e.g. twice the distance between the shoulders) (see Fig. 2).

In top plan view, the upper ends are located further forward of the shoulders of the operator (e.g. on lines extending from toes of the operator) (see Fig. 1).

Pulley portions P are respectively attached to the upper ends of the arm portions 6B.

Each pulley portion P includes a pulley main body Pa and a pulley supporting member Pb that supports the pulley main body Pa such that the pulley main body Pa is rotatable about a pulley axis Px, and the pulley supporting member Pb is fixed to the arm portion 6B.

The load operating portions 3 are respectively provided at the lower ends of operation wires W that are suspended via the pulley portions P.

The pulley main bodies Pa are fixed to the arm portions 6B such that, in top plan view, the pulley axes Px extend orthogonal (or substantially orthogonal) to the respective cylindrical axes 6x on the upper end side of the arm portions 6B, and in front view, the pulley axes Px extend horizontal (or substantially horizontal) (see Fig. 4).

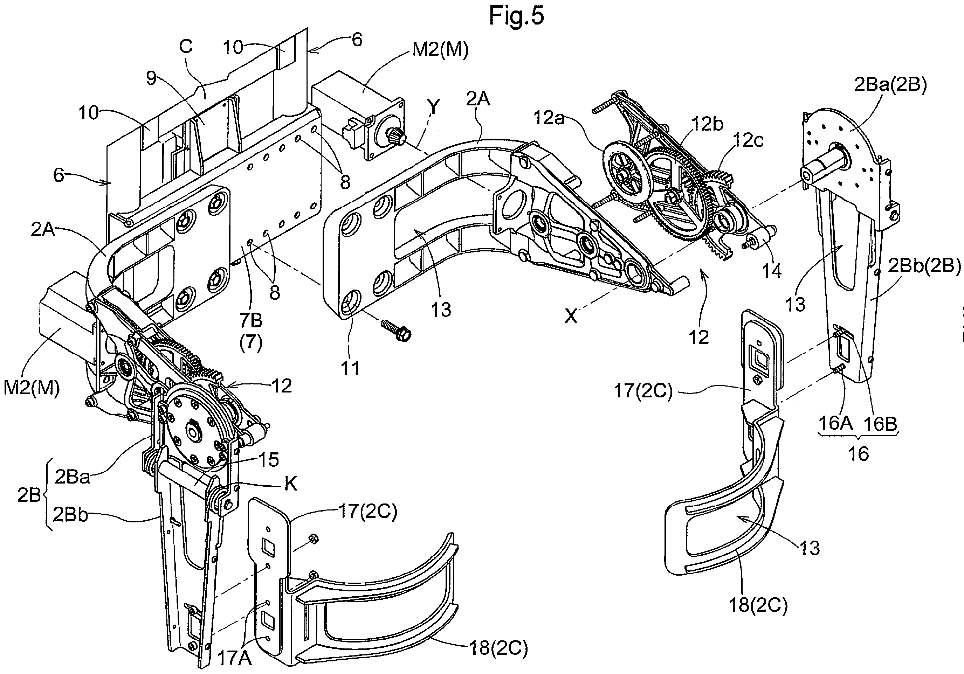

The horizontal frames 7 are formed such that the outer edge portions of the flat plates are bent into a flange shape, and thus their entire section modulus is increased and their flexural rigidity is improved (see Fig. 5).

As shown in Fig. 1, an electric winch (corresponding to "lifting/lowering device") M1 that drives to lift and lower the load operating portions 3 is attached to a first horizontal frame 7A, which is the upper horizontal frame of the upper and lower horizontal frames 7.

The electric winch M1 can realize a thin design because the axes of the motor and transmissions thereof extend along the flat surface F of the main body portion 1, whereby the length of the protrusion of the electric winch M1 rearward from the main body portion 1 is reduced as small as possible.

Base end portions of the above-described operation wires W are coupled to the electric winch M1. The electric winch M1 is configured to drive to reel up (or drive to reel out) the operation wires W upon operation of switches 22 provided on the load operating portions.

That is, the load operating portions 3 attached to the tip end portions of the operation wires W are lifted (or lowered) as the electric winch M1 drives to reel up (or drives to reel out) the operation wires W.

As shown in Fig. 2, the right and left leg operating portions 2 are separately attached to a second horizontal frame 7B, which is the lower horizontal frame of the upper and lower horizontal frames 7.

A plurality of bolt attachment holes 8 are formed in the second horizontal frame 7B at intervals in the right-left direction in two rows, namely an upper row and a lower row. Bolt attachment holes 8 for attaching the leg operating portions 2 can be freely selected from among the plurality of bolt attachment holes 8, and the right and left leg operating portions 2 can be appropriately arranged by changing the distance between the right and left leg operating portions 2 according to the width of the waist and the distance between the legs of the operator who uses the assistive suit S.

Incidentally, the present embodiment is provided with twenty bolt attachment holes 8, including ten holes in the right-left direction multiplied by two holes in the vertical direction (see Fig. 5). Each leg operating portion 2 is attached to the second horizontal frame 7B using four bolts in total, including two bolts in the right-left direction multiplied by two bolts in the vertical direction (i.e. eight bolts are used for the right and left leg operating portions 2 in total).

As shown in Fig. 3, a bracket 9 is provided on upper and lower flanges of the second horizontal frame 7B, and the battery V is fixed to the bracket 9. The battery V is attached so as to be located on the rear side of the second horizontal frame 7B.

The control unit C is located in a space between the first horizontal frame 7A and the second horizontal frame 7B. The control unit C is formed so as to have a thin rectangular box shape with a flat contour. The control unit C is attached to the vertical frames 6 by brackets 10 on the vertical frames 6, such that the flat surface of the control unit C extends along the flat surface F of the main body portion 1.

In this way, in the assistive suit S according to the present embodiment, the electric winch M1, the control unit C and the battery V are attached to the rear side of the main body portion 1 in the stated order, from the top to the bottom in the vertical direction of the main body portion 1. This can realize a thinner configuration, compared with one in which the electric winch M1, the control unit C and the battery V are stacked one on top of another in the front-rear direction on the rear side of the main body portion 1 (see Fig. 1). Furthermore, since they are arranged adjacent to each other in the vertical direction, it is possible to reduce the horizontal width of the main body portion 1 (see Fig. 2). As a result, the assistive suit S is compact and is not bulky as a whole. Therefore, the operator can easily move despite the assistive suit S being attached to the back of the operator.

Note that the electric winch M1, the control unit C and the battery V are arranged within a height/vertical range between the neck and thighs of the operator when he/she wears the assistive suit S. Therefore, the center of gravity of the assistive suit S tends to come to or adjacent the center of gravity of the operator, and the operator who wears the assistive suit S can move around without feeling any discomfort.

Also, the electric winch M1 is located upward of the control unit C and the battery V, and therefore it is possible to reduce the distance of the routes of the operation wires W to the load operating portions 3, to thereby reduce the amount of wiring.

Furthermore, the control unit C, which is the core of the assistive suit S, is guarded by the electric winch M1 from above and the battery V from below. Therefore, it is easier to protect the control unit C from being damaged by hitting against another object, and it is possible to maintain proper device control.

The battery V is configured to supply power to e.g. the electric winch M1, the control unit C, a pair of right and left electric motors M2 that drive to swing the leg operating portions 2 to be described later, and sensors (not shown).

The control unit C is configured to receive signals from the switches 22 of the load operating portions 3, the sensors and so on, and to control the driving of the driving means M associated respectively therewith.

In the assistive suit S according to the present embodiment, the control unit C is located inside a triangle that interconnects the components of the driving means M including the electric winch M1 and the pair of right and left electric motor M2 (see Fig. 2), the distance from each component of the driving means M to the control unit C can be the shortest. As a result, electric wires can be short, and therefore, it is easier to protect the electric wires against noise, and it is easier to suppress the risk of short circuit and disconnection of the electric wires.

As shown in Fig. 5, each leg operating portion 2 includes; a waist frame 2A that has the shape of "L" in top plan view; a pivot arm portion 2B that is supported by a front portion of the waist frame 2A so as to be swingable in the front-rear direction about a lateral axis X; and an abutting portion 2C that is provided on a tip end portion of the pivot arm portion 2B and is configured to abut against a front portion of a thigh of the operator.

The base end side portion of the "L" shape of each waist frame 2A is provided with a plurality of attachment bolt insertion holes 11, for attaching the waist frame 2A to the second horizontal frame 7B as described above. The tip end side portion of the "L" shape of each waist frame 2A houses a gear box 12 that drives to swing the pivot arm portion 2B about the lateral axis X.

The electric motors M2 for driving the pivot arm portions 2B are respectively coupled to rear side portions of the gear boxes 12. The electric motors M2 are provided such that the rotational axes Y thereof extend in the front-rear direction.

The rotational forces of the electric motors M2 are converted into rotational forces about the lateral axis X by the gear boxes 12, and are then transmitted to the pivot arm portions 2B in a decelerated state.

The electric motors M2 are inserted into window portions 13 that are formed in the waist frames 2A. Thus, their respective spaces are shared between them so that space saving can be achieved.

Note that, in the assistive suit S according to the present embodiment, each waist frame 2A is constituted by two frame members that are provided in parallel with each other with a gap therebetween in the vertical direction, and the space between the frame members is formed as the window portion 13.

The gear boxes 12 include a pair of bevel gears 12a on the input side which are are configured to perform conversion in rotational axis direction; and a plurality of spur gears 12b on the output side relative thereto and connected parallel therewith, whereby each of the gear boxes 12 is formed thin in its entirety. Each waist frame 2A shares the same space with the gear box 12 associated therewith, and each gear box 12 itself is also compact. Thus, the entirety of each waist frame 2A is configured to achieve space saving.

A spur gear 12c at the output side end of each gear box 12 has a shape from which approximately half the circumference in the circumferential direction has been removed. The two ends of the outer circumference in the circumferential direction abut against a stopper 14, and thus the spur gear 12c is prevented from rotating further.

Therefore, the pivot arm portion 2B that is integrally coupled to the spur gear 12c at the output side end is also allowed to rotate by only approximately a half turn about the lateral axis X.

As a result, it is possible to reduce the weight of the gears and enable the gears to have multiple functions.

Each pivot arm portion 2B incudes: an arm base end portion 2Ba that is substantially disk-shaped and is attached to the rotational axis of the spur gear 12c to be rotatable integral therewith; and an arm tip end portion 2Bb that extends from the arm base end portion 2Ba in a radial direction of the arm base end portion 2Ba. Therefore, the pivot arm portions 2B are supported by the main body portion 1 with the waist frames 2A being interposed therebetween, at positions that are downward of the lateral axes X so as to be swingable about the lateral axes X in the front-rear direction.

The arm base end portions 2Ba are located on both sides of the operator who wears the assistive suit S, at positions slightly forward of the waist of the operator (see Fig. 1).

Also, a pivot shaft (an example of "leg operating portion switching mechanism") 15 is provided at a portion of the outer periphery of each arm base end portion 2Ba so as to extend in a radial direction of the arm base end portion 2Ba. The arm tip end portions 2Bb are coupled to the pivot shafts 15 so as to be swingable about the pivot shafts 15.

The arm tip end portion 2Bb can swing relative to the arm base end portions 2Ba only within the ranges that are laterally outward of imaginary vertical surfaces containing the respective arm base end portions 2Ba (see Fig. 3). The arm tip end portions 2Bb are urged to swing limit positions that are in the above-described imaginary vertical surfaces, by coil springs K that are fitted onto the pivot shafts 15. Thus, the arm tip end portion 2Bb are usually located at the swing limit positions.

The elastic urge forces of the coil springs K are set to be small so as not to prevent the operator from moving.

With reference to Fig. 3, "an operative state" depicts a state in which the arm tip end portions 2Bb are at the swing limit positions (as shown in solid lines), and "an inoperative state" depicts a state in which the arm tip end portion 2Bb have swung to the laterally outward positions (as shown in dash-dotted lines).

In the operative state, the abutting portions 2C attached to distal ends of the arm tip end portions 2Bb can abut against the thighs of the operator who wears the assistive suit S, and the assistive suit S can assist the operator to stand up.

In the inoperative state, the abutting portions 2C are retracted laterally outward of the thighs of the operator, and the assistive suit S can be smoothly attached to or detached from the operator.

As shown in Fig. 5, each arm tip end portions 2Bb comprises a groove-shaped member (e.g. a groove-shaped steel member) whose width decreases toward the tip end portion thereof; and at the tip end portion, an attachment portion (examples of "orientation changing mechanism") 16 is provided for attaching the abutting portion 2C thereto.

Each attachment portion 16 includes two bolt insertion holes 16A, 16B that are formed with a gap therebetween in the longitudinal direction of the arm tip end portion 2Bb.

In the present embodiment, the bolt insertion hole 16A on the tip end side is a circular hole, and the other bolt insertion hole 16B is an elongated hole that has the shape of an arc centering around the bolt insertion hole 16A.

Therefore, the orientation of the abutting portion 2C, which is attached by inserting bolts into the two bolt insertion holes 16A, 16B, can be adjusted within the range of the elongated bolt insertion hole 16B, whereby the abutting portions 2C can be adjusted depending on the body shape of the operator.

Each abutting portion 2C includes, as an integral unit, an attachment-target portion 17 that has a strip shape and is configured to be aligned with and coupled to the attachment portion 16 using a bolt; and an abutting surface portion 18 that has a curved shape and abuts against the front surface of a thigh.

Each attachment-target portion 17 defines four bolt insertion holes (examples of "position changing mechanism") 17A, with each gap therebetween in the longitudinal direction thereof aligned with the pitch between the two bolt insertion holes 16A, 16B of the arm tip end portion 2Bb.

Any pair of bolt insertion holes that are to be faced and coupled to the bolt insertion holes 16A, 16B of the arm tip end portion 2Bb can be freely selected from among the four bolt insertion holes 17A, and accordingly the position where the abutting portion 2C is attached to the arm tip end portion 2Bb can be changed in the longitudinal direction of the arm. As a result, a separation distance to the abutting portion 2C from the lateral axis X, which is a rotational axis of the pivot arm portion 2B, can be changed and adjusted.

Thus, the abutting portions 2C can be adjusted depending on the body shape of the operator.

Also, in the assistive suit S according to the present embodiment, the position changing mechanism (the bolt insertion holes 17A) for changing and adjusting the separation distance between the lateral axis X and the abutting portion 2C is formed in the attachment-target portion 17 on the swinging tip end side, not in the arm tip end portion 2Bb on the swinging base end side. This prevents a distal end of the arm tip end portion 2Bb from protruding further from the swinging radius of the abutting portion 2C on the swinging tip end side.

Note that the windows 13 are formed in large surface portions such as the waist frames 2A, the pivot arm portion 2B, and the abutting portions 2C so that the amount of material of the members can be reduced and the total weight can be reduced. As a result, it is possible to reduce the costs of the assistive suit S, and to reduce a burden on the operator who wears the assistive suit S to improve the ease of handling of the assistive suit S.

As described above, the load operating portions 3 are respectively attached to the tip end portions of the pair of right and left operation wires W whose base ends are coupled to the electric winch M1.

As shown in Fig. 2, each operation wire W includes an inner wire Wa and an outer tube Wb that encloses and is slidable along the outer circumferential surface of the inner wire Wa.

The outer tube Wb is provided only within the range of the entire length of the inner wire Wa between the electric winch M1 and the pulley portion P at the tip end of the arm portion 6B.

In the inner wire Wa, the base end portion is coupled to the electric winch M1, the intermediate portion is supported by and suspended from the pulley main body Pa, the front end portion is coupled to the load operating portions 3.

The right and left load operating portions 3 are provided symmetric with each other. Each load operating portion 3 includes a hook portion 20 made of metal, and a grip portion 21 made of synthetic resin and integrally attached to an outer surface of the hook portion 20.

Each hook portion 20 is formed by bending a metal plate member, and includes: an upper portion 20a that has a flat plate shape; a side portion 20b that has a flat plate shape, is orientated in the vertical direction, and extends downward from an outer portion of the upper portion 20a; a lower portion 20c that has a flat plate shape and extends inward from a lower portion of the side portion 20b; and a protruding portion 20d that extends obliquely upward from an inner portion of the lower portion 20c. Tip ends of the inner wires Wa are connected to inner portions at the centers of the upper portions 20a of the hook portions 20 in the front-rear direction.

Each grip portion 21 is made of synthetic resin, and includes: a first upper portion 21a in form of a horizontal plane; a second upper portion 21b in form of an inclined surface that extends from the first upper portion 21a and is inclined downward in an obliquely rearward direction (see Fig. 1); a side portion 21c that slightly bulges laterally outward, is orientated in the vertical direction, and extends downward from outer portions of the first and second upper portions 21a, 21b; and a cutout portion 21d that is formed in the second upper portion 21b.

The first and second upper portions 21a, 21b of the grip portions 21 are attached (bonded) to the upper portions 20a of the hook portions 20, the side portions 21c of the grip portions 21 are attached (bonded) to the side portions 20b of the hook portions 20, and wires 18 pass through the cutout portions 21d of the grip portions 21, respectively.

The first upper portions 21a of the grip portions 21 are provided with the switches 22 that are of a push button type and are used to perform a lifting operation (or a lowering operation).

In the assistive suit S according to the present embodiment, the switch 22 of the right grip portion 21 is configured to be used to perform a lifting operation, and the switch 22 of the left grip portion 21 is configured to be used to perform a lowering operation.

Note that the switches 22 are electrically connected to the control unit C via cables (not shown) so that operational signals from the switches 22 can be transmitted to the control unit C.

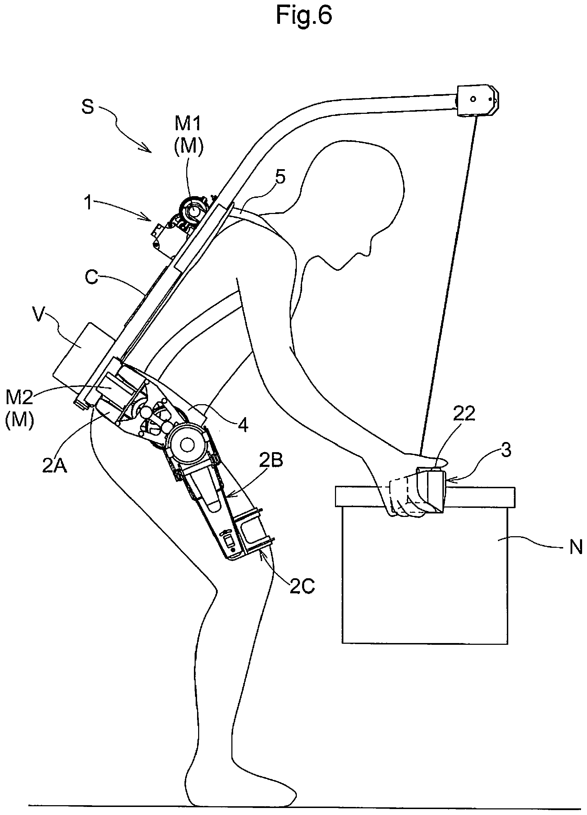

As shown in Fig. 6, with the lower portions 20c of the hook portions 20 hooked onto a load N, it is possible to lift (or lower) the load N by operating the switches 22, for example.

As shown in Fig. 4, the waist belt 4 is attached to the main body portion 1 via the waist frames 2A. The waist belt 4 is configured to be attached to and surround the waist of the operator.

Specifically, the waist belt 4 includes: a rear circumferential portion 4A that extends from a rear surface portion to both of right and left side surface portions of the waist; a left circumferential portion 4B that extends from the left side surface portion to a front surface portion of the waist; a right circumferential portion 4C that extends from the right side surface portion to the front surface portion of the waist; and a buckle portion 4D that is configured to connect the front end of the left circumferential portion 4B and the front end of the right circumferential portion 4C. The length of the waist belt 4 is adjustable depending on the length around the waist of the operator, using a belt length adjustment mechanism (not shown) that is provided at the buckle portion 4D.

Also, pads 23 that are configured to abut against the waist are respectively provided on the inner peripheral portions of the portions (the rear circumferential portion 4A, the left circumferential portion 4B and the right circumferential portion 4C) of the waist belt 4.

Also, belt length adjustment mechanisms (examples of "position changing mechanism") 24 are provided at a coupling portion between the rear circumferential portion 4A and the left circumferential portion 4B, and also at a coupling portion between the rear circumferential portion 4A and the right circumferential portion 4C, are configured to adjust the length of the belt each with a buckle type connection.

With the belt length adjustment mechanisms 24, the pads 23 that are respectively provided on the left circumferential portion 4B and the right circumferential portion 4C can be moved to appropriate positions on two sides of the abdomen of the operator depending on the body shape of the operator who wears the assistive suit S.

As shown in Fig. 1, the shoulder belts 5 are respectively provided on the right and the left. Upper end portions are attached to the first horizontal frames 7A, and lower end portions are attached to the rear circumferential portion 4A of the waist belt 4.

The assistive suit S can be stably attached to the back of the operator using the waist belt 4 and the shoulder belts 5.

The weight of the assistive suit S and the load N mainly act on the waist of the operator via the waist belt 4, and they are stably supported by the waist.

Also, the shoulder belts 5 mainly achieve the function of preventing the main body portion 1 from moving rearward from the back of the operator.

Next, an example of a procedure that is performed when the operator who wears the assistive suit S lifts the load N will be described.
1. In the case where the load N is located at a low position on the floor, the operator takes a crouching posture, and locks the load operating portions 3 to the load N.

At this time, the abutting portions 2C attached to the tip end of the pivot arm portions 2B are lifted by the thighs of the operator, and therefore, as shown in Fig. 6, the pivot arm portions 2B are entirely in the state of having swung about the lateral axes X forward and upward from the rear side.

Incidentally, signals that indicate the status of the swinging of the pivot arm portions 2B are transmitted to the control unit C from a sensor (not shown).

2. The operator performs an ON operation on the lifting switch 22 of the load operating portion 3.

At this time, the controller unit C transmits a rotation instruction to the electric motors M2 before transmitting a reeling instruction to the electric winch M1, to perform swing control such that the pivot arm portions 2B return to the original vertical orientation. As a result, the abutting portions 2C abut against the thighs of the operator, and while the abutting forces act as reaction forces, the rotational forces of the electric motors M2 act in the direction in which the assistive suit S is lifted. Therefore, a lifting force acts on the waist of the operator via the waist belt 4, and thus it is possible to assist the operator to stand up (see Fig. 6).

3. Upon the operator standing up, the electric winch M1 drives in place of the electric motors M2, to lift the load N.

With the assistive suit S according to the present embodiment, the assistive suit S can be compact, and therefore, the operator who wears the assistive suit S can move more easily. Also, since the weight of the assistive suit S is reduced, an easy-to-attach configuration is employed, and an adjustable configuration that realizes an appropriate attachment state depending on the body shape of the operator is employed, a burden on the operator can be further reduced, and the assistive suit S can smoothly achieve the intended effect: "allow the operator to lift and lower a load with a small force".

As a result, even an operator who does not have very much physical strength can easily perform an operation to lift and lower a load.

### Other Embodiments Related to First Embodiment

The following describes other embodiments.
1. The pulley portions P do not necessarily have the configurations described in the embodiment above, and may be configured as follows.

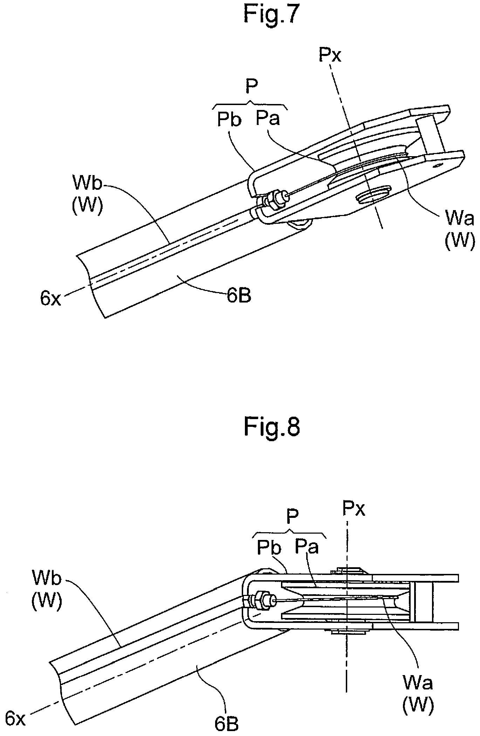

That is, in the embodiment above, the pulley main bodies Pa are fixed to the arm portions 6B such that, in top plan view, the pulley axes Px are orthogonal (or substantially orthogonal) to the direction in which the cylindrical axes 6x extend on the upper end side of the arm portions 6B, and, in front view, the pulley axes Px are horizontal (or substantially horizontal). However, as shown in Fig. 7, for example, the pulley axes Px may be fixed to the arm portions 6B so as to incline downward in a laterally outward direction from the assistive suit S.

This embodiment is effective when the width of the target load N is smaller than the lateral distance between the upper end portions of the arm portions 6B (the distance between the right and left pulley portions P), and the driving to lift and lower the load N is performed in a situation where the right and left inner wires Wa are inclined such that the distance therebetween decreases in a downward direction.

In other words, the pulley axes Px are orthogonal (or substantially orthogonal) to the inner wires Wa that are inclined, and the side surfaces of the outer circumferential grooves of the pulley main bodies Pa are less likely to rub against the inner wires Wa, and the effect of preventing abrasion can be expected.

Also, although not shown in the drawings, if a mechanism that allows the pulley portions P to rotate about the cylindrical axes 6x of the arm portions 6B is provided, it is possible to change the angle of the pulley axes Px to an appropriate angle (such that the pulley axes Px are orthogonal (or substantially orthogonal) to the inner wires Wa) according to the width of the load N.

In yet another embodiment, as shown in Fig. 8, the pulley portions P may be configured such that the pulley axes Px extend in the right-left direction in top plan view.

Even in this case, it is possible that the pulley portions P are configured such that the pulley axes Px are horizontal (or substantially horizontal) in front view, or the pulley portions P are configured such that the pulley axes Px are inclined downward in a laterally outward direction from the assistive suit S in front view, or a mechanism that allows the pulley portions P to rotate about the cylindrical axes 6x of the arm portions 6B is provided.

2. The lifting/lowering device M1, the control device C and the power supply device V that are provided in the main body portion 1 are not necessarily arranged in the order of: the lifting/lowering device M1, the control device C and the power supply device V from the top to the bottom relative to the main body portion 1 as described in the embodiment above.

For example, instead of being arranged in a line in the vertical direction, the devices may be arranged so as to form a dogleg shape in rear view, or some of the devices may be arranged side by side in the right-left direction.

In short, it is only necessary that the lifting/lowering device M1, the control device C and the power supply device V are arranged along the flat surface F of the main body portion 1, and the direction in which they are arranged may be changed as appropriate.

Also, even if the devices are arranged in a line in the vertical direction, they are not necessarily arranged in the order of: the lifting/lowering device M1, the control device C and the power supply device V from the top to the bottom, and for example, they may be arranged in the order of: the lifting/lowering device M1, the power supply device V, and the control device C from the top to the bottom.

3. The position changing mechanism 24 is not necessarily configured as the belt length adjustment mechanisms of a buckle type as described in the embodiment above. For example, an insertion portion may be provided in the pads 23 into which portion the attachment belt portion 4 can be inserted, so that the pads 23 are slidable along the longitudinal direction of the attachment belt portion 4.

Alternatively, the attachment belt portion 4 may be provided with a locking portion that can change the positions to which the pads 23 are attached.

Velcro (registered trademark), a bolt connection portion, or another well-known lock structure may be employed as the locking portion in this case.

In short, it is only necessary that the position changing mechanism 24 is configured such that the positions to which the pads 23 are attached can be changed in the circumferential direction of the attachment belt portion 4, and all of such mechanisms are collectively referred to as "the position changing mechanism".

4. The leg operating portion switching mechanism 15 is not necessarily formed by attaching pivot shafts to the base end portions of the pivot arm portions 2B as described in the embodiment above. Alternatively, it may be formed by attaching pivot shafts 15 to the tip end portions of the pivot arm portions 2B, for example.

Also, the leg operating portion switching mechanism 15 may be provided for the abutting portions 2C instead of the pivot arm portions 2B.

In short, it is only necessary that the abutting portions 2C are configured to switch between the operative state in which the abutting portions 2C abut against the thighs of the operator and the inoperative state in which the abutting portions 2C are retracted to positions that are laterally outward of the thighs of the operator, and all of such mechanisms are collectively referred to as "the leg operating portion switching mechanism 15".

5. The position changing mechanism 17A is not necessarily configured as bolt insertion holes described in the embodiment above, may be formed as, for example, a slidable coupling mechanism that couples the pivot arm portions 2B and the abutting portions 2C to each other such that the abutting portions 2C are slidable in the longitudinal directions of the pivot arm portions 2B.

In short, it is only necessary that position changing mechanism 17A is configured such that the separation distance to the abutting portions 2C from the lateral axes X can be changed and adjusted, and all of such mechanisms are collectively referred to as "the position changing mechanism 17A".

6. The orientation changing mechanism 16 is not necessarily formed as the attachment portion that is constituted by the bolt insertion holes (round holes) 16A and bolt insertion holes (elongated holes that have the shape of an arc) described in the embodiment above, and may be formed as, for example, universal joints that couple the pivot arm portions 2B and the abutting portions 2C to each other such that the angle therebetween can be changed.

In short, it is only necessary that the orientation changing mechanism 16 is configured such that the orientation of the abutting portions 2C can be changed and adjusted such that the surfaces of the thighs of the operator and the abutting surface portions 18 abut against each other, and all of such mechanisms are collectively referred to as "the orientation changing mechanism 16".

Although reference signs are provided in the description above to make it easier to refer to the drawings. However, providing the reference signs does not mean that the present invention is limited to the configurations shown in the accompanying drawings. Also, as a matter of course, the present invention may be carried out in various modes without departing from the scope of the present invention, which is defined by the claims.

### Second Embodiment

An assistive suit according to the present invention is configured to have the function of assisting the operator to perform a loading operation and an unloading operation. The following describes an assistive suit 101 according to the present embodiment.

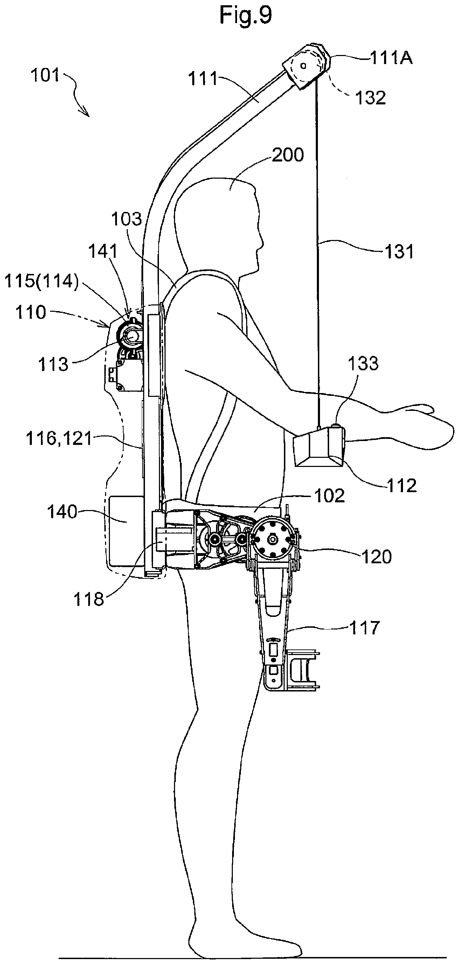

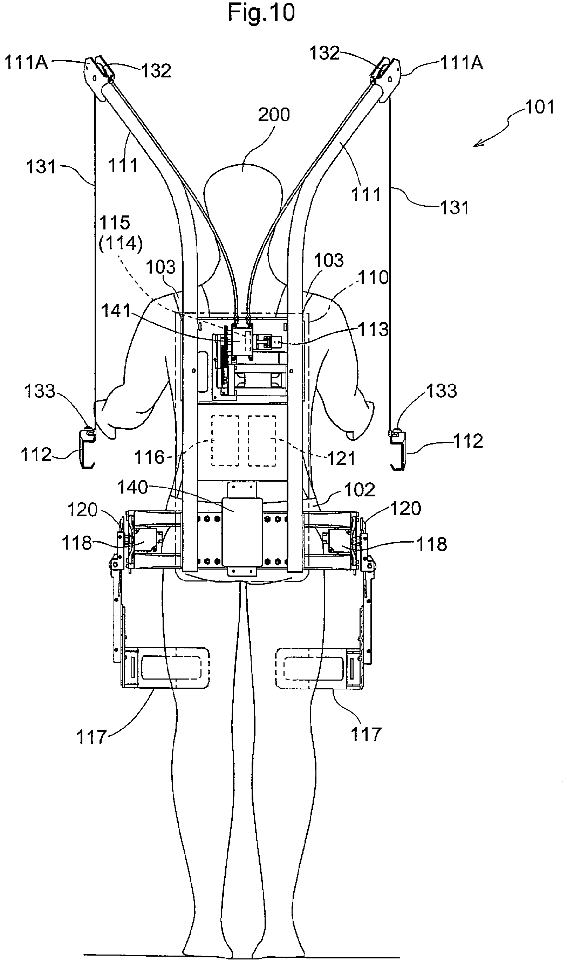

Fig. 9 is a side view of the assistive suit 101 according to the present embodiment, which is attached to an operator 200. Fig. 10 is a rear view of the assistive suit 101 according to the present embodiment, which is attached to the operator 200. As shown in Figs. 9 and 10, the assistive suit 101 includes; a main body portion 110; arm portions 111; load operating portions 112; a reel motor 113; a reeling amount detecting portion 114; a rotation number detecting portion 115; a reel motor control portion 116, leg operating portions 117; leg motors 118; detecting portions 120; and a leg motor control portion 121. In particular, the reeling amount detecting portion 114, the rotation number detecting portion 115, the reel motor control portion 116, the detecting portions 120 and the leg motor control portion 121 are configured as either or both of hardware and software, using a CPU as a core member, in order to perform various processes related to the control of the driving of the assistive suit 200.

The main body portion 110 is located at a position on the back of the operator 200. A waist belt 102 and shoulder belts 103 are attached to the main body portion 110. In the present embodiment, the assistive suit 101 is fixed to the waist of the operator 200 using the waist belt 102, and the operator 200 wears the assistive suit 101 on his/her back secondarily using the shoulder belts 103.

The arm portions 111 extend from the main body portion 110 to a position that is forward of the operator 200, across the head of the operator 200. The arm portions 111 are formed by using two hollow pipes so as to sandwich the main body portion 110. The arm portions 111 extend from the main body portion 110, and the distance between the two arm portions 111 gradually increases from a position that is near the head of the operator 200 so as not to come into contact with the head, and the arm portions 111 then extend forward from the head of the operator 200.

The load operating portions 112 are suspended from tip end portions 111A of the arm portions 111 using wires 131, and support a load when the operator 200 holds the load with his/her hands. Pulleys 132 are provided in the tip end portions 111A of the arm portions 111. The wires 131 pass through hollow portions that are inside the arm portions 111 in the radial direction, and extend from a winch 141 that is built into the main body portion 110. Therefore, the wires 131 are drawn downward via the pulleys 132, and the load operating portions 112 are provided at the tip end of the wires 131. The load operating portions 112 are respectively suspended from the two arm portions 111, and are formed as a pair. The load operating portions 112 are configured to be hooked onto handle portions of a load that is subjected to a loading operation and an unloading operation by the operator 200, to support the load.

The reel motor 113 is provided in the main body portion 110, and reels up the wires 131 according to an instruction from the operator 200. The reel motor 113 is built into the main body portion 110. The operator 200 issues an instruction by pressing buttons 133 that are provided on the load operating portions 112. For example, it is possible to employ a configuration in which the reel motor 113 reels up the wires 131 upon the operator 200 pressing the button 133 on the load operating portion 112 that is held in the right hand of the operator 200, and the reel motor 113 reels out the wires 131 upon the operator 200 pressing the button 133 on the load operating portion 112 that is held in the left hand of the operator 200. As a matter of course, it is also possible to employ a configuration in which the reel motor 113 reels out the wires 131 upon the operator 200 pressing the button 133 on the load operating portion 112 that is held in the right hand of the operator 200, and the reel motor 113 reels up the wires 131 upon the operator 200 pressing the button 133 on the load operating portion 112 that is held in the left hand of the operator 200. The reel motor 113 is driven by power outputted from a battery 140 that is provided in the main body portion 110.

The reeling amount detecting portion 114 detects a reeling amount of the wires 131 that are reeled up by the reel motor 113. The reeling amount of the wires 131 is the length of the wires 131 that are reeled up or reeled out by the reel motor 113. As described above, the load operating portions 112 are provided at the tip ends of the wires 131, and therefore it is possible to detect the moving distance of the load operating portions 112 based on the reeling amount.

In the present embodiment, the main body portion 110 includes the rotation number detecting portion 115 that detects the number of rotations of the reel motor 113; and the reeling amount detecting portion 114 detects the reeling amount of the wires 131 based on the number of rotations of the reel motor 113 detected by the rotation number detecting portion 115. To this end, it is preferable that the rotation number detecting portion 115 includes a well-known Hall-effect element, etc., for example.

The reel motor control portion 116, corresponding to the motor control portion according to the present invention, is provided in the main body portion 110, and controls the reeling speed of the reel motor 113 based on the reeling amount. The reel motor control portion 116 supplies the output power from the above-described battery 140 to the reel motor 113. At this time, the reel motor control portion 116 adjusts power to be supplied to the reel motor 113, based on the reeling amount of the wires 131 detected by the reeling amount detecting portion 114; and controls the number of rotations of the reel motor 113. How the reel motor control portion 116 controls the number of rotations of the reel motor 113 will be described later.

The leg operating portions 117 extend from the main body portion 110 to the thighs across lateral sides of the operator 200; and are configured to abut against front portions of the thighs from the positions to which the leg operating portions 117 extend. Note that "extend from the main body portion 110 across lateral sides of the operator 200" means that the leg operating portion 117 for the right leg extends from the main body portion 110 and passes through an area on the right side of the right thigh, and the leg operating portion 117 for the left leg extends from the main body portion 110 and passes through an area on the left side of the left thigh. The right and left leg operating portions 117 extend to the thighs, and are bent from these positions so as to be able to abut against positions that are slightly above the knees on the front side of the thighs. It is only necessary that the positions against which particularly the leg operating portions 117 abut are located below vertically central portions of the thighs when the thighs are seen in the vertical direction.

The leg motors 118 adjust the loads that are applied to the front portions of the thighs by the leg operating portions 117 according to an instruction from the operator 200. In the present embodiment, two leg motors 118 are provided on the waist belt 102 so as to be able to respectively drive the right and left leg operating portions 117. The operator 200 issues the instruction by pressing buttons 133 that are provided on the load operating portions 112 in the same manner as in the case of the above-described reel motor 113. For example, it is preferable that the leg motors 118 are driven to cause the leg operating portions 117 to press the front portions of the thighs upon the operator 200, by pressing the button 133 on one of the load operating portions 112 that is held in the right hand of the operator 200. As a matter of course, it is also possible to employ a configuration in which the leg motors 118 are driven upon the operator 200 pressing the button 133 on the load operating portion 112 that is held in the left hand of the operator 200. The leg motors 118 are also driven by the output power from the battery 140 provided in the main body portion 110. Note that the right and left leg operating portions 117 may be configured to drive independent of each other.

The leg operating portions 117 are used to press the front portions of the thighs when the operator 200 extends his/her bent knees. Thus, the operator 200 in a crouching position can easily stand up.

The detecting portions 120 detect the angle that is formed by the trunk and the thighs of the operator 200. When the operator 200 crouches, the front portions of the thighs of the operator 200 press the leg operating portions 117, and the leg operating portions 117 rotate about predetermined rotational axes relative to the main body portion 110. Therefore, it is preferable that potentiometers are provided, as the detecting portions 120, on the rotational axes about which the leg operating portions 117 rotate relative to the main body portion 110. Thus, the potentiometers can detect the angle of rotation about the rotational axes, which makes it possible to appropriately detect the angle that is formed by the trunk and the thighs of the operator 200 based on the result of detection. The result of detection by the detecting portions 120 is transmitted to the leg motor control portion 121 to be described later.

The leg motor control portion 121 is provided in the main body portion 110, and controls output torques of the leg motors 118 based on the detected angle. The leg motor control portion 121 supplies the output power from the above-described battery 140 to the leg motors 118. At this time, the leg motor control portion 121 adjusts the power to be supplied to the leg motors 118, based on the angle that is formed by the trunk and the thighs of the operator 200 detected by the detecting portions 120, and controls the number of rotations of the leg motors 118. How the leg motor control portion 121 controls the number of rotations of the leg motors 118 will be described later.

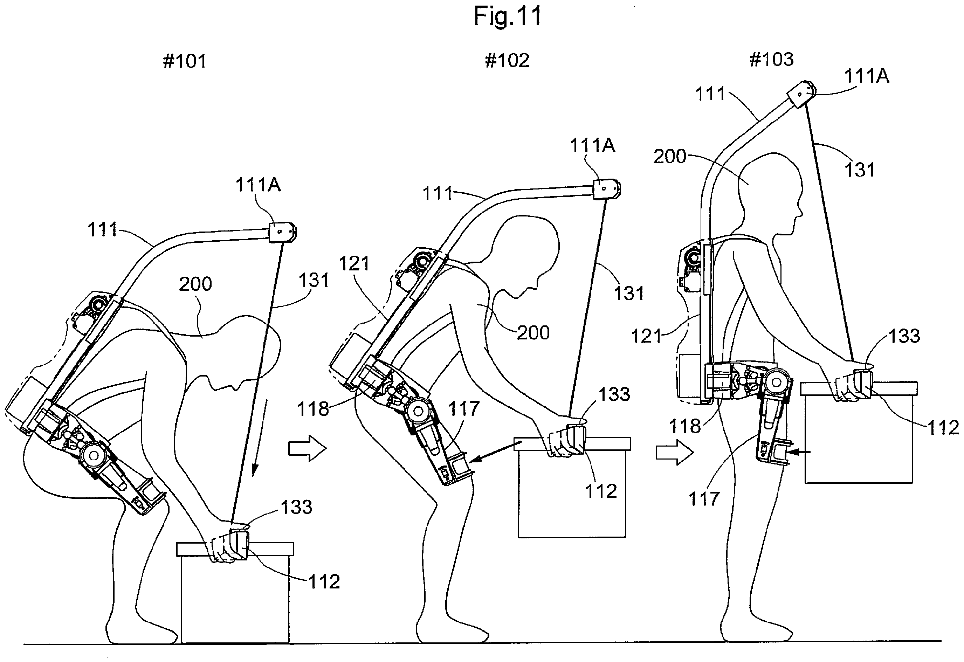

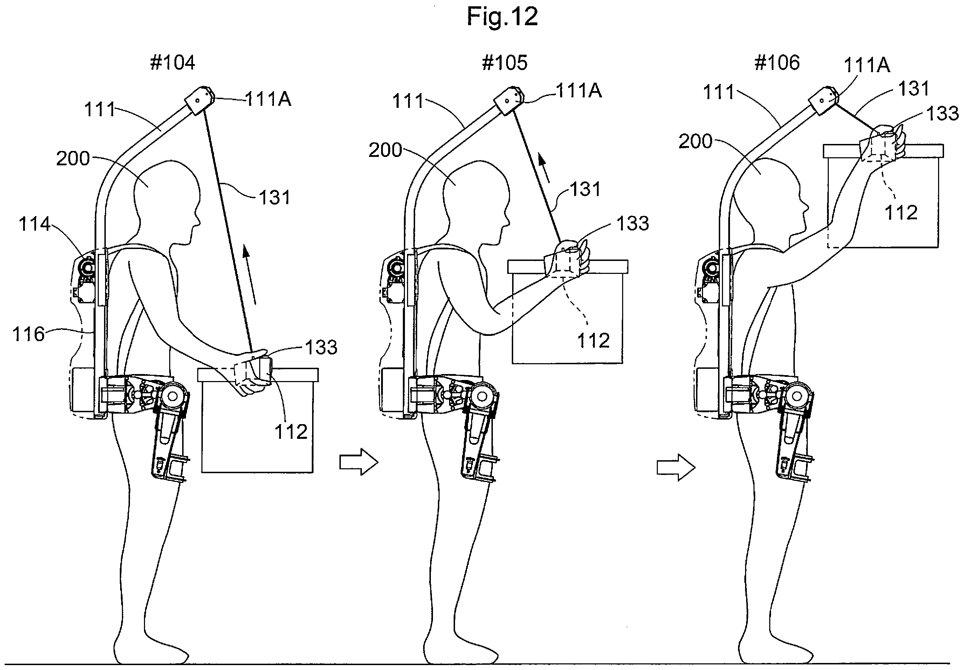

Next, the operation of the assistive suit 101 will be described with reference to Figs. 11 and 12. First, when lifting a load that is located at the feet of the operator 101, as shown in #101 in Fig. 11, the operator 200 presses a button 133 provided on a load operating portion 112 to reel out the wires 131 until the load operating portions 112 is hooked onto the handle portions of the load, and hooks the load operating portions 112 onto the handle portions of the load.

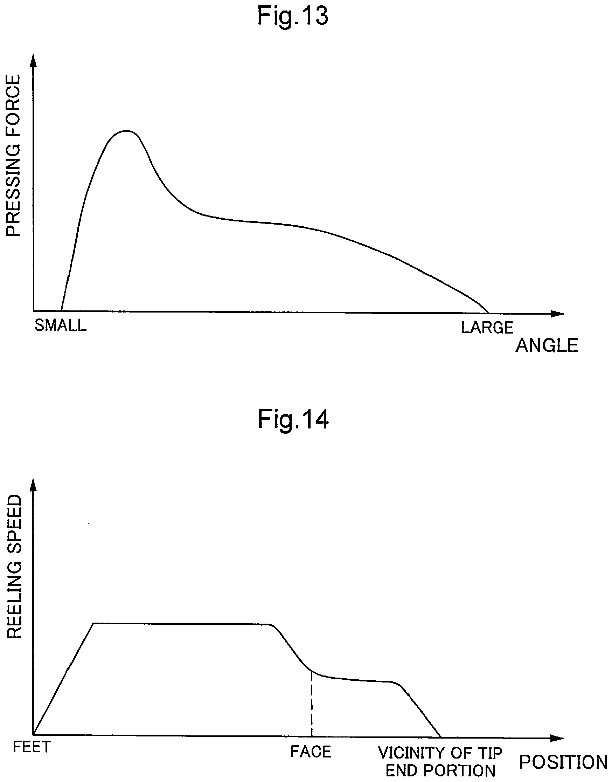

As shown in #102 in Fig. 11, the operator 200 straightens his/her back. In this posture, the operator 200 presses a button 133 provided on a load operating portion 112, to drive the leg motors 118. As a result, the thighs of the operator 200 are pressed by the leg operating portions 117, and the assistive suit 101 can thus assist the operator 200 to extend his/her knees. When the knees are bent and the body is located at a low position at this time, it is preferable that the leg motor control portion 121 controls to increase the pressing force as shown in Fig. 13, and to reduce the pressing force as the knees are extended and thus the angle formed by the trunk and the knees increases. As shown in #103 in Fig. 11, upon the knees being extended, the operator 200 stops pressing a button 133 on a load operating portion 112 to stop driving the leg motors 118. In Fig. 11, the length dimension of an arrow represents the strength of the pressing force applied to the front portions of the knees by the leg operating portions 117. That is, since the arrow in #102 in Fig. 11 is longer than the arrow in #103 in Fig. 11, the pressing force in #102 in Fig. 11 is greater than the pressing force in #103 in Fig. 11.

Next, in this state, the operator 200 presses a button 133 provided on a load operating portions 112 to drive the reel motor 113, and reels up the wires 131 as shown in #104 in Fig. 12. As shown in Fig. 14, it is preferable that the reel motor control portion 116 performs control such that, when the reeling up of the wires 131 is to be started, the reeling speed gradually increases until it reaches a predetermined reeling speed. At this time, the reeling amount is also detected by the reeling amount detecting portion 114. Based on the result of detection by the reeling amount detecting portion 114, when the load operating portions 112 pass in front of the face of the operator 200, it is preferable that, as shown in #105 in Fig. 12, the reel motor control portion 116 reduces the reeling speed to be smaller than the reeling speed during the period until the load operating portions 112 reach the face. In Fig. 12, the length dimension of an arrow represents the degree of the reeling speed. That is, since the length of the arrow in #105 in Fig. 12 is shorter than the length of the arrow in #104 in Fig. 12, the reeling speed in #105 in Fig. 12 is slower than the reeling speed in #104 in Fig. 12.

When the reel motor 113 further reels up the wires 131 until the distance between the load operating portions 112 and the tip end portions 111A of the arm portions 111 becomes equal to or shorter than a predetermined distance as shown in #106 in Fig. 12, the reel motor control portion 116 stops the reel motor 113 regardless of whether or not the operator 200 is pressing a button 133 on a load operating portion 112. At this time, as shown in Fig. 14, when stopping the reeling up of the wires 131, the reel motor control portion 116 gradually reduces the reeling speed from a predetermined reeling speed, to stop reeling up. As a result, it is possible to reduce the reaction force that acts on the operator 200 depending on the weight of the load, to reduce a physical burden on the operator 200. Also, at this time, it is preferable that the reeling amount detecting portion 114 calibrates the detected value of the reeling amount of the wires 131. As a result, the reeling amount detecting portion 114 can continuously and accurately detect the reeling amount of the wires 131.

Also, in this case, it is preferable that the reel motor control portion 116 maintains the reeling speed of the reel motor 113 at a speed based on the reeling amount detected by the reeling amount detecting portion 114 regardless of the weight of the load, and that the leg motor control portion 121 maintains the output torque of the leg motors 118 at an output torque based on the angle that is formed by the trunk and the thighs of the operator 200 detected by the detecting portions 120, regardless of the weight of the load. As a result, the operator 200 can perform operation without reducing operational efficiency even if the weights of the loads vary widely.

Also, it is preferable that the reel motor control portion 116 stops the reel motor 113 if the reeling speed is deviated from a predetermined acceptable speed and the output torque of the reel motor 113 is deviated from a predetermined acceptable torque. As a result, when reeling up the wires 131, the reel motor control portion 116 can stop the reel motor 113 if the reeling speed suddenly decreases and the output torque of the reel motor 113 suddenly increases, by assuming that a foreign object is caught by or becomes entangled with a movable portion of the assistive suit 101, for example. Therefore, it is possible to remove the foreign object in that state or remove the foreign object by reversing the reel motor 113.

Also, it is preferable that the leg motor control portion 121 stops the leg motors 118 if the output torque of the leg motors 118 is deviated from a predetermined acceptable torque. As a result, when pressing the front portions of the knees of the operator 200, the leg motor control portion 121 can stop the leg motors 118 if the output torque of the leg motors 118 suddenly increases, by assuming that a foreign object is caught by or becomes entangled with a movable portion of the assistive suit 101, for example. Therefore, it is possible to remove the foreign object in that state or remove the foreign object by reversing leg motors 118.

### Other Embodiments Related to Second Embodiment

The above-described embodiment is provided with the rotation number detecting portion 115 that detects the number of rotations of the reel motor 113, and the reeling amount detecting portion 114 detects the reeling amount based on the number of rotations of the reel motor 113 detected by the rotation number detecting portion 115. However, the reeling amount detecting portion 114 may be configured to detect the reeling amount of the wires 131. Alternatively, it is possible to employ a configuration that is provided with another functional portion that detects the reeling amount of the wires 131 so that the reeling amount of the wires 131 can be detected based on the result of the detection by the functional portion.

In the above-described embodiment, when the reeling up of the wires 131 is to be started, the reel motor control portion 116 performs control so that the reeling speed gradually increases until it reaches a predetermined reeling speed, and when the reeling up of the wires 131 is to be stopped, the reel motor control portion 116 performs control so that the reeling speed gradually decreases from the predetermined reeling speed. However, the reel motor control portion 116 may be configured to perform control to maintain a constant reeling speed regardless of the timing of reeling up the wires 131.

In the above-described embodiment, when the load operating portions 112 passes in front of the face of the operator 200, the reel motor control portion 116 reduces the reeling speed so as to be smaller than the reeling speed during the period until the load operating portions 112 reach the face. However, it is also possible that the reel motor control portion 116 performs control at the same reeling speed even if the load operating portions 112 passes in front of the face, and it is also possible to employ a configuration in which the reeling speed is changed even if the load operating portions 112 are located at a distance from the face.

In the above-described embodiment, the reel motor control portion 116 stops the reel motor 113 if the distance between the load operating portions 112 and the tip end portions 111A of the arm portions 111 becomes equal to or smaller than a predetermined distance. However, the reel motor control portion 116 may be configured to automatically stop the reel motor 113 when it is determined that the load operating portions 112 reach the tip end portions 111A of the arm portions 111, regardless of the distance between the load operating portions 112 and the tip end portions 111A of the arm portions 111.

In the above-described embodiment, the reeling amount detecting portion 114 calibrates the detected value of the reeling amount of the wires 131 if the distance between the load operating portions 112 and the tip end portions 111A of the arm portions 111 becomes equal to or smaller than a predetermined distance and the reel motor 113 is stopped. However, the reeling amount detecting portion 114 may be configured not to perform calibration regardless of the distance between the load operating portions 112 and the tip end portions 111A of the arm portions 111, or configured to perform calibration in response to an operation by the operator 200, for example.

In the above-described embodiment, the reel motor control portion 116 maintains the reeling speed based on the reeling amount regardless of the weight of the load. However, the reel motor control portion 116 may be configured to change the reeling speed depending on the weight of the load.

In the above-described embodiment, the reel motor control portion 116 preferably stops the reel motor 113 if the reeling speed is deviated from a predetermined acceptable speed and the output torque of the reel motor 113 is deviated from a predetermined acceptable torque. However, it is possible to employ a configuration in which the reel motor control portion 116 stops the reel motor 113 when at least one of: the condition that the reeling speed is deviated from a predetermined acceptable speed; and the condition that the output torque of the reel motor 113 is deviated from a predetermined acceptable torque, is satisfied. As a matter of course, the reel motor control portion 116 may also be configured not to stop the reel motor 113 even if the reeling speed is deviated from the predetermined acceptable speed and the output torque of the reel motor 113 is deviated from a predetermined acceptable torque.

In the above-described embodiment, the assistive suit 101 includes the leg operating portions 117, the leg motors 118, the detecting portions 120 and the leg motor control portion 121. However, it is possible that assistive suit 101 is configured without these functional portions.

In the above-described embodiment, the leg operating portions 117 presses the front portions of the thighs when the operator 200 extend his/her bent knees. However, the leg operating portions 117 may be configured to press the front portions of the thighs when the operator 200 bends his/her extended knees as well. With this configuration, the operator 200 can slowly crouch even if he/she is holding a load, and thus it is possible to reduce the burden on the body of the operator 200.

In the above-described embodiment, the leg motor control portion 121 maintains the output torque that is based on the angle that is formed by the trunk and the thighs of the operator 200 regardless of the weight of the load that is held by the operator 200. However, the leg motor control portion 121 may be configured to change the output torque of the leg motors 118 according to the weight of the load that is held by the operator 200.

In the above-described embodiment, the leg motor control portion 121 preferably stops the leg motors 118 if the output torque of the leg motors 118 is deviated from a predetermined acceptable torque. However, the leg motor control portion 121 may be configured not to stop the leg motors 118 even if the output torque of the leg motors 118 is deviated from the predetermined acceptable torque.

In the above-described embodiment, the potentiometer is preferably used as the detecting portions 120. However, this is merely an example, and it is naturally possible to employ another functional portion to detect the angle formed by the trunk and the thighs of the operator 200.

In the above-described embodiment, the assistive suit 1 includes the arm portions 111, the load operating portions 112, the reel motor 113, the reeling amount detecting portion 114 and the reel motor control portion 116. However, the assistive suit 1 may be configured without these functional portions.

### INDUSTRIAL Applicability

The present invention is applicable to an assistive suit that assists an operator to perform an operation (to make a movement).

### DESCRIPTION OF REFERENCE SIGNS

1: Main Body Portion
2: Leg Operating Portion
2B: Pivot Arm Portion
2C: Abutting Portion
3: Load Operating Portion
4: Waist Belt (corresponding to Attachment Belt Portion)
15: Pivot Shaft (Example of Leg Operating Portion Switching Mechanism)
16: Attachment Portion (Example of Orientation Changing Mechanism)
17A: Bolt Insertion Hole (Example of Position Changing Mechanism)
18: Abutting Surface Portion
23: Pad
24: Belt Length Adjustment Mechanism (Example of Position Changing Mechanism)
C: Control Unit (corresponding to Control Device)
F: Flat Surface
M1: Electrical Winch (corresponding to Lifting/Lowering Device)
M2: Electrical Motor (corresponding to Driving Device)
X: Lateral Axis
V: Battery (corresponding to Power Supply Device)
101: Assistive Suit
110: Main Body Portion
111: Arm Portion
111A: Tip End Portion
112: Load Operating Portion
113: Reel Motor
114: Reeling Amount Detecting Portion
115: Rotation Number Detecting Portion
116: Reel Motor Control Portion (Motor Control Portion)
117: Leg Operating Portion
118: Leg Motor
120: Detecting Portion
121: Leg Motor Control Portion (Motor Control Portion)
131: Wire
200: Operator

## Claims

1. An assistive suit comprising:
a main body portion (1) that has a flat shape and is configured to be attached to a back of an operator so as to extend along the back;
a pair of load operating portions (3) that extend forward from the main body portion (1) across the operator to hold a load;
a lifting/lowering device (M1) that drives to lift and lower the load operating portions;
a control device (C) that controls lifting/lowering driving that is performed by the lifting/lowering device; and
a power supply device (V; 140) for driving, each of the load operating portions (3) including a hook portion (20) and a grip portion (21),
the hook portion (20) including:
an upper portion (20a), and
a side portion (20b) that extends downward from an outer portion of the upper portion (20a), and a lower portion (20c) to hold the load,
**characterized in that**:
each grip portion is integrally attached to an outer surface of the hook portion of the respective operating portion, the grip portion (21) including:
a first upper portion (21a) attached to the upper portion (20a) of the hook portion (20) and provided with a switch (22) of a push button type,
a second upper portion (21b) attached to the upper portion (20a) of the hook portion (20) and having a cutout portion (21d), and
a side portion (21c) attached to the side portion (20b) of the hook portion (20);
the control device (C) is configured to, upon operation of the switch (22) of the first upper portion (21a) of one of the load operating portions (3), cause the lifting/lowering device (M1) to lift the pair of load operating portions (3),
the control device (C) is configured to, upon operation of the switch (22) of the first upper portion (21a) of the other of the load operating portions (3), cause the lifting/lowering device (M1) to lower the pair of load operating portions (3), and
the lifting/lowering device (M1), the control device (C) and the power supply device (V) are provided on the main body portion (1) so as to be aligned along a flat surface of the main body portion (1).

2. The assistive suit according to claim 1, **characterized in that**
the lifting/lowering device (M1), the control device (C) and the power supply device (V) are provided on the main body portion (1) so as to be aligned in a vertical direction of the main body portion (1).

3. The assistive suit according to claim 2, **characterized in that**
the lifting/lowering device (M1), the control device (C) and the power supply device (V) are arranged in the order of: the lifting/lowering device (M1), the control device (C) and the power supply device (V), from the top.

## Patentansprüche

1. Unterstützungsanzug (1), umfassend:
einen Hauptkörperabschnitt (1), der eine flache Form aufweist und dazu ausgelegt ist, am Rücken eines Bedieners befestigt zu werden, so dass er sich entlang des Rückens erstreckt;
ein Paar von Lasthandhabungsabschnitten (3), die sich vom Hauptkörperabschnitt (1) nach vorne über den Bediener erstrecken, um eine Last zu halten;
eine Hebe-/Senkvorrichtung (M1), die antreibt, um die Lasthandhabungsabschnitte anzuheben und zu abzusenken;
eine Steuervorrichtung (C), die den Hebe-/Senkantrieb steuert, der von der Hebe-/Senkvorrichtung durchgeführt wird; und
ein Stromversorgungsvorrichtung (V; 140) zum Antrieb,
wobei jeder der Lasthandhabungsabschnitte (3) einen Hakenabschnitt (20) und einen Griffabschnitt (21) aufweist,
wobei der Hakenabschnitt (20) aufweist:
einen oberen Abschnitt (20a) und
einen Seitenabschnitt (20b), der sich von einem äußerem Abschnitt des oberen Abschnitts (20a) nach unten erstreckt, und einen unteren Abschnitt (20c), um die Last zu halten,
**dadurch gekennzeichnet, dass**
jeder Griffabschnitt fest mit einer äußeren Oberfläche des Hakenabschnitts des jeweiligen Handhabungsabschnitts verbunden ist,
wobei der Griffabschnitt (21) aufweist:
einen ersten oberen Abschnitt (21a), der an dem oberen Abschnitt (20a) des Hakenabschnitts (20) befestigt ist und mit einem Schalter (22) vom Typ einer Drucktaste versehen ist,
einen zweiten oberen Abschnitt (21b), der an dem oberen Abschnitt (20a) des Hakenabschnitts (20) befestigt ist und einen ausgeschnittenen Abschnitt (21d) aufweist, und
einen Seitenabschnitt (21c), der an dem Seitenabschnitt (20b) des Hakenabschnitts (20) befestigt ist,
die Steuervorrichtung (C) dazu ausgelegt ist, beim Betätigen des Schalters (22) des ersten oberen Abschnitts (21a) eines der Lasthandhabungsabschnitte (3) zu bewirken, dass die Hebe-/Senkvorrichtung (M1) das Paar von Lasthandhabungsabschnitten (3) anhebt,
die Steuervorrichtung (C) dazu ausgelegt ist, beim Betätigen des Schalters (22) des ersten oberen Abschnitts (21a) des anderen der Lasthandhabungsabschnitte (3) zu bewirken, dass die Hebe-/Senkvorrichtung (M1) das Paar von Lasthandhabungsabschnitten (3) absenkt, und
die Hebe-/Senkvorrichtung (M1), die Steuervorrichtung (C) und die Stromversorgungsvorrichtung (V) am Hauptkörperabschnitt (1) so vorgesehen sind, dass sie entlang einer flachen Oberfläche des Hauptkörperabschnitts (1) ausgerichtet sind.

2. Unterstützungsanzug nach Anspruch 1, **dadurch gekennzeichnet, dass**
die Hebe-/Senkvorrichtung (M1), die Steuervorrichtung (C) und die Stromversorgungsvorrichtung (V) am Hauptkörperabschnitt (1) so vorgesehen sind, dass sie in einer vertikalen Richtung des Hauptkörperabschnitts (1) ausgerichtet sind.

3. Unterstützungsanzug nach Anspruch 2, **dadurch gekennzeichnet, dass**
die Hebe-/Senkvorrichtung (M1), die Steuervorrichtung (C) und die Stromversorgungsvorrichtung (V) in der Reihenfolge von oben angeordnet sind: Hebe-/Senkvorrichtung (M1), Steuervorrichtung (C) und Stromversorgungsvorrichtung (V).

## Revendications

1. Combinaison d'assistance comprenant :
une partie de corps principale (1) qui a une forme plate et qui est configurée pour être fixée au dos d'un opérateur de manière à s'étendre le long du dos ;
une paire de parties d'actionnement de charge (3) qui s'étendent vers l'avant à partir de la partie de corps principale (1) pardessus l'opérateur pour tenir une charge ;
un dispositif de levage/d'abaissement (M1) qui entraîne le levage et l'abaissement des parties d'actionnement de charge ;
un dispositif de commande (C) qui commande un entraînement de levage/d'abaissement effectué par le dispositif de levage/d'abaissement ; et
un dispositif d'alimentation (V ; 140) pour l'entraînement,
chacune des parties d'actionnement de charge (3) comportant une partie crochet (20) et une partie de préhension (21),
la partie crochet (20) comportant :
une partie supérieure (20a), et
une partie latérale (20b) qui s'étend vers le bas à partir d'une partie extérieure de la partie supérieure (20a), et une partie inférieure (20c) pour maintenir la charge,
**caractérisée en ce que** :
chaque partie de préhension est fixée en un seul tenant à une surface extérieure de la partie crochet de la partie d'actionnement respective, la partie de préhension (21) comportant :
une première partie supérieure (21a) fixée à la partie supérieure (20a) de la partie crochet (20) et pourvue d'un commutateur (22) de type bouton-poussoir,
une deuxième partie supérieure (21b) fixée à la partie supérieure (20a) de la partie crochet (20) et ayant une partie découpée (21d), et
une partie latérale (21c) fixée à la partie latérale (20b) de la partie crochet (20) ;
le dispositif de commande (C) est configuré pour, lors de l'actionnement du commutateur (22) de la première partie supérieure (21a) de l'une des parties d'actionnement de charge (3), amener le dispositif de levage/d'abaissement (M1) à soulever la paire de parties d'actionnement de charge (3),
le dispositif de commande (C) est configuré pour, lors de l'actionnement du commutateur (22) de la première partie supérieure (21a) de l'autre des parties d'actionnement de charge (3), amener le dispositif de levage/d'abaissement (M1) à abaisser la paire de parties d'actionnement de charge (3), et
le dispositif de levage/d'abaissement (M1), le dispositif de commande (C) et le dispositif d'alimentation (V) sont prévus sur la partie de corps principale (1) de manière à être alignés le long d'une surface plate de la partie de corps principale (1).

2. Combinaison d'assistance selon la revendication 1, **caractérisée en ce que**
le dispositif de levage/d'abaissement (M1), le dispositif de commande (C) et le dispositif d'alimentation (V) sont prévus sur la partie de corps principale (1) de manière à être alignés dans une direction verticale de la partie de corps principale (1).

3. Combinaison d'assistance selon la revendication 2, **caractérisée en ce que**
le dispositif de levage/d'abaissement (M1), le dispositif de commande (C) et le dispositif d'alimentation (V) sont agencés dans l'ordre suivant : le dispositif de levage/d'abaissement (M1), le dispositif de commande (C) et le dispositif d'alimentation (V), en commençant par le haut.
